# EUROPÄISCHE PATENTSCHRIFT

(11) **EP 2 852 493 B1**
(45) Veröffentlichungstag und Bekanntmachung des Hinweises auf die Patenterteilung: **12.07.2017**
(21) Anmeldenummer: 13725093.2
(22) Anmeldetag: 13.05.2013
(51) Int. Cl.: B29C 70/08, B29C 70/52, B29C 70/86

(54) **PUL-CORE-VERFAHREN MIT PMI-SCHAUMKERN**
PUL-CORE METHOD WITH A PMI FOAM CORE
PROCÉDÉ "PUL-CORE" AVEC NOYAU DE MOUSSE PMI

(30) Priorität: 21.05.2012 DE 102012208428
(43) Veröffentlichungstag der Anmeldung: 01.04.2015
(73) Patentinhaber: Evonik Röhm GmbH, 64293 Darmstadt (DE); Secar Technologie GmbH, 8682 Mürzzuschlag-Hönigsberg (AT)
(72) Erfinder: KRAATZ, Arnim, 64287 Darmstadt (DE); SEMLITSCH, Karl-Heinz, 8680 Mürzzuschlag (AT)
(86) Internationale Anmeldenummer: PCT/EP2013/059756
(87) Internationale Veröffentlichungsnummer: WO 2013/174665

(56) Entgegenhaltungen:
- EP-A2- 0 158 118
- DE-U1- 29 913 877
- US-A- 5 438 171

## Beschreibung

### Gebiet der Erfindung

Die vorliegende Erfindung betrifft ein neuartiges Verfahren zur Herstellung von neuen faserverstärkten Profilwerkstoffen, die mit einem PMI-Schaumkern gefüllt sind. Insbesondere betrifft die vorliegende Erfindung ein neuartiges Pultrosionsverfahren, kurz Pul-Core-Verfahren, mittels dessen in einem Verfahrensschritt der faserverstärkte Profilwerkstoff hergestellt wird und gleichzeitig mit dem PMI-Schaumkern gefüllt wird. Dabei wird im gleichen Verfahrensschritt eine sehr gute Anbindung des PMI-Schaumkerns an das faserverstärkte Profilmaterial gewährleistet.

### Stand der Technik

Nach Stand der Technik können mit PMI-Schäumen gefüllte Hohlkörper mittels des so genannten In-Mold-Verfahren hergestellt werden. Dabei werden die fertigen Hohlkörper mit einem Granulat gefüllt, welches anschließend thermisch aufgeschäumt wird und dabei vernetzt. Nachteil dieses Verfahrens ist, dass man mehrere Verfahrensschritte, nämlich die Hohlkörperherstellung, das Füllen mit dem Granulat und das Aufschäumen benötigt. Ein weiterer Nachteil ist, dass aufgrund der relativ hohen Schäumungstemperaturen des PMI thermisch instabile Materialien, wie ein Composite aus Kohlefasern und einem Epoxidharz, nicht verwendet werden können. Darüber hinaus ist die beim Aufschäumen bewirkte Anbindung zwischen Schaum und Deckschicht nur schwach ausgebildet. Ein solches In-Mold-Verfahren ist beispielsweise in WO 2012/013393 beschrieben. PUR-Schaumfüllungen werden alternativ nach Stand der Technik als Flüssigkeit in den Hohlraum injiziert und anschließend aufgeschäumt und ausgehärtet. Dieses Verfahren bringt jedoch zum einen ähnliche Nachteile wie das beschriebene Verfahren zur PMI-Schaumfüllung mit sich und ist darüber hinaus nicht auf PMI übertragbar.

Alternativ können offene Schalenteile mit einem zugeschnittenen Schaumkern ausgefüllt werden und anschließend ein zweites Schalenteil unter Bildung des Hohlprofils mit dem ersten Schalenteil verklebt oder verschweißt werden. Zur besseren Anbindung des Schaumkerns, kann an den Grenzflächen darüber hinaus eine Klebeschicht aufgetragen werden. Nachteile dieses Verfahrens sind, dass sehr viele zeitaufwendige Prozessschritte benötigt werden, dass das Endprodukt Fügestellen aufweist, und dass bei der Herstellung des Schaumkerns je nach Form desselben eine große Menge Verschnittmaterial anfallen kann.

In einer Variante, wie sie in WO 2012/052219 beschrieben ist, wird der Schaumkern zusammen mit dem Gewebematerial - wie z.B. Kohlefasern - in einer Form eingelegt und das Harz - z.B. Epoxidharz - in diese Form eingespritzt und ausgehärtet. Zwar werden hier Fügestellen vermieden, dafür weist dieses Verfahren in Bezug auf Verschnitt, Prozessgeschwindigkeit und Aufwendigkeit die gleichen Nachteile wie das zuvor beschriebene Verfahren auf.

Das Pultrusionsverfahren, das auch unter dem deutschen Namen Strangziehverfahren bekannt ist, ist ein etabliertes Verfahren, das auf erste Entwicklungen Anfang der 1950er Jahre zurückgeht. Das Pultrusionsverfahren wird dazu verwendet, kontinuierlich faserverstärkte Kunststoffprofile, wie z.B. auch Hohlprofile, insbesondere Rohre, herzustellen. Ursprünglich wurden dabei mehrere Glasfasern (Glasrovings) mit einem Polyester- oder einem Epoxidharz imprägniert, anschließend über ein oder mehrere Formgebungswerkzeuge in die endgültige Form zusammengeführt. Abschließend wird das Harz ausgehärtet und das kontinuierlich produzierte Profil zu einzelnen Werkstücken zersägt. Die Dokumente EP 0 158 118, DE 299 13 877, US 5 438 171 offenbaren ein Verfahren zur kontinuierlichen Herstellung von faserverstärkten, mit einem Schaumkern gefüllten Endlosprofilen, dadurch gekennzeichnet, dass es sich bei dem Verfahren um ein Pultrusionsverfahren handelt, bei dem in der Mitte ein Schaumkern zugeführt wird, um den mittels des Pultrusionsverfahrens eine Deckschicht aus einem Fasermaterial und einem Thermoplasten oder einem Duroplasten gebildet wird.

### Aufgabe

Die der vorliegenden Erfindung zugrundeliegende Aufgabe war es vor allem, ein neuartiges Verfahren zur Herstellung von faserverstärkten, mit einem PMI-Schaummaterial gefüllten Hohlprofilen, wie z.B. Rohren, zur Verfügung zu stellen.

Insbesondere war es Aufgabe der vorliegenden Erfindung, ein Verfahren zur Verfügung zu stellen, mittels dessen eine sehr gute Anbindung zwischen Schaumkern und äußeren Deckschichten ermöglicht wird. Weiterhin sollen mittels des erfinderischen Verfahrens auch thermisch bei der Schäumungstemperatur des PMI nicht belastbare Materialien als Deckmaterial verwendbar sein.

Darüber hinaus war es Aufgabe, dass das Verfahren schnell, in wenigen Schritten und kostengünstig durchzuführen ist. Insbesondere wäre es von Vorteil, wenn das Verfahren unter minimalen Modifikationen auf bestehenden Anlagen ausgeführt werden kann.

Weiterhin bestand die Aufgabe, dass das Verfahren kontinuierlich durchführbar sein soll.

Darüber hinaus war es Aufgabe der vorliegenden Erfindung, neue, mit einem PMI-Schaum gefüllte Hohlprofile zur Verfügung zu stellen, die a) keine Klebschicht zwischen Deckmaterial des Hohlprofiles und dem PMI-Schaumkern aufweisen, b) keine Fügestellen aufweisen und c) eine gute Bindung zwischen Deckmaterial und PMI-Schaumkern haben. Insbesondere war es Aufgabe dabei, Hohlprofile zur Verfügung zu stellen, deren Deckmaterial aus einem mit einem Polymerharz verbundenen Fasermaterial und deren Kern aus einem PMI-Schaumkern besteht, zur Verfügung zu stellen, wobei die Porengröße und damit die Dichte des Schaumkerns, flexibel einstellbar ist.

Weitere Aufgaben können sich aus der Beschreibung, den Zeichnungen bzw. den Beispielen ergeben, ohne dass diese an dieser Stelle explizit genannt werden.

### Lösung

Gelöst werden die Aufgaben mittels eines neuartigen Verfahrens zur kontinuierlichen Herstellung von faserverstärkten, mit einem PMI-Schaumkern gefüllter Endlosprofile. Bei diesem Verfahren handelt es sich um ein Pultrusionsverfahren, bei dem in der Mitte ein Schaumkern aus PMI zugeführt wird. Weiterhin wird um diesen Schaumkern mittels des Pultrusionsverfahren eine Deckschicht aus einem Fasermaterial und einem Thermoplasten oder einem Duroplasten gebildet. Dieses neue Pultrusionsverfahren unter Einführung eines PMI-Schaumkerns in ein Pultrusionsprodukt wird im Folgenden als Pul-Core-Verfahren bezeichnet.

Bei dem Pultrusionsverfahren, welches auch unter dem Namen Strangziehverfahren bekannt ist, handelt es sich um ein Verfahren, bei dem in einem ersten Verfahrensschritt mehrere Fasern oder Rovings mit einem Harz getränkt werden. Man unterscheidet dabei zwischen einem so genannten offenen Pultrusionsverfahren, bei dem diese Harztränkung in einer Tränkwanne erfolgt, durch die die Fasern geführt werden, und einem geschlossenen Verfahren, bei dem die Tränkung mit dem Harz erst in dem eigentlichen formgebenden Instrument unter Druck erfolgt. In der Regel weisen die Anlagen vor der Tränkung Vorrichtungen, wie z.B. Kadiergitter, auf, mittels derer die Fasern in eine zur späteren Formgebung nötige Verteilung gebracht werden und optional vorgelegte Rovings in einzelne Fasern aufgebrochen werden können. Es ist auch möglich alternativ oder ergänzend zu Rovings bzw. Fasern Vliese, Gewebe und/oder Gelege als Fasermaterial einzusetzen.

Nach der Tränkung des Fasermaterials mit dem Harz wird dieses anschließend, bzw. im geschlossenen Verfahren simultan, mittels einem oder mehrere Werkzeuge vorgeformt. Diese Vorformung kann z.B. mittels einer oder mehrerer Werkzeugmuffen erfolgen. Erfindungsgemäß wird das Fasermaterial dabei um den getrennt, bevorzugt nicht durch die Tränkwanne, zugeführten Schaumkern geführt, so dass dieser vor dem Eintritt in das eigentliche Formgebungswerkzeug von dem Fasermaterial umgeben ist.

In dem Formgebungswerkzeug erfolgen simultan zueinander die endgültige Formgebung, das Aushärten des Harzes und eine Kalibrierung. Bei der Formgebung ist es möglich, dass die Fasern in Verarbeitungsrichtung parallel zu einander ausgerichtet um den Schaumkern liegen. Bevorzugt jedoch bilden die Fasern um den Schaumkern eine Gewebestruktur. Durch diese Ausführung wird eine besondere mechanische Festigkeit des späteren Werkstücks erreicht.

Die Aushärtung des Harzes, welches auch als Verstärkungsmaterial bezeichnet werden kann, erfolgt in der Regel thermisch. Die dazu verwendete Temperatur im Formgebungswerkzeug hängt von dem jeweilig verwendeten Harz ab und ist für den Fachmann leicht ermittelbar. In der Regel liegen solche Temperaturen zwischen 100 und 200 °C. Um gleichmäßig ausgehärtete Werkstücke zu gewährleisten, ist dabei auf eine gleichmäßige Temperaturverteilung innerhalb des Werkzeuges zu achten.

An das formgebende Werkzeug schließt in der Regel eine Vorrichtung zur Kühlung des fertigen Hohlprofils an.

Wenn es sich bei dem Harz nicht um einen späteren Duroplasten, sondern um ein thermoplastisches Material handelt, ist es alternativ auch möglich, dass das Harz oberhalb der Schmelz- bzw. Glasübergangstemperatur auf die Fasern aufgetragen wird, und die "Aushärtung" im Formgebungswerkzeug unter Kühlung erfolgt.

Der Transport der Fasern erfolgt in der Regel durch ein Ziehen des Endlosprofils am Ende der Anlage z.B. durch einen Raupenabzug oder durch reversierende hydraulische Greifer. Ein großer Vorteil dieser Formgebung ist, dass sie kontinuierlich erfolgen kann, und dass man so zunächst ein Endlosprofil erhält. Dieses Endlosprofil wird am Ende der Anlage in einzelne Werkstücke mit gewünschter Länge vollautomatisch zersägt.

Mit diesem neuartigen Pul-core-Verfahren können verschiedenartige Endlosprofile hergestellt werden. Die Profile können eine oder mehrere Kammern aufweisen. Profile mit einer Kammer können z.B. als Rundrohr oder auch als Kammerprofil in rechteckiger oder quadratischer Form vorliegen. Auch ist es möglich, Endlosprofile mit komplexer Form, d.h. zwei oder mehreren verschieden geformten oder unterschiedlich großen Kammern, herzustellen. Rundrohre können beispielsweise neben einer einfachen runden Form, mit rundem Schaumkern und rundem Mantel, z.B. auch einen runden Schaumkern und einen eckigen Mantel, bzw. einen eckigen Schaumkern und einen runden Mantel, aufweisen. Unabhängig von der Form und der Anzahl Kammern kann das Endlosprofil mit unterschiedlichen Wandstärken bzw. Schaumkerngrößen hergestellt werden.

Die erfindungsgemäßen Werkstücke haben sehr gute mechanische Eigenschaften, insbesondere in Bezug auf sehr gute Beul, Knick- und Drucksteifigkeiten. Sie zeigen auch besonders hohe Druckfestigkeiten und eine erhöhte Energieaufnahme bei einer Schlagbelastung, so dass sie bei einer Verwendung im Automobilbau z.B. in einem Crashfall zu einer Verbesserung der Karoseriestabilität beitragen. Darüber hinaus können sie im Vergleich zu Metallteilen, insbesondere gegenüber nicht gefüllten Hohlkörpern, in einer Karosserie zu einer besseren Akustik, d.h. zu einer geringeren Geräuschentwicklung durch das Fahrgestell bei.

Es gibt mehrere Varianten des Pultrusionsverfahren, von denen einige auf das erfindungsgemäße Pul-Core-Verfahren durch eine zusätzliche Schaumkernzuführung übertragbar sind.

Beim Pul-preforming-Verfahren werden vorgefertigte Preforms aus Fasermaterial verwendet, um dem Profil die notwendigen Eigenschaften zu geben. Dies führt insbesondere zu multidirektional höheren Festigkeitswerten. Unter Preforms werden dabei definierte Gewebe, Gelege, Schläuche oder andere vorgefertigte Trockenpreforms verstanden, die im kontinuierlichen Prozess mittels Tauchtränkung bzw. Injektion mit dem Matrixmaterial verbunden werden. In dieser Variante des Verfahrens kann der Schaumkern bei der Herstellung der Preforms eingebracht werden. Die Tränkung mit dem Harz erfolgt entsprechend an dem, den Schaumkern enthaltenden, Preform. Durch die geschlossene Porenstruktur des PMI-Schaummaterials werden dabei nur an der Außenfläche vorhandene offene Poren mit dem Harz gefüllt.

Das Pul-winding-Verfahren ähnelt der traditionellen Pultrusion. Jedoch werden bei diesem Prozess die Verstärkungsfasern durch rotierende Wickeleinrichtungen in unterschiedlichen Winkeln mit der Matrix überzogen und im Anschluss in einem formgebenden Werkzeug ausgehärtet. Durch diese Technologie kann man besonders hohe Belastungsanforderungen an Rohre, Stäbe bzw. andere Profilen erfüllen. Dieses Verfahren kann mit unterschiedlich rotierenden Winkeln ausgelegt werden. Die Winkelgrade sind in der Regel von 0° bis 85° einstellbar. Der Schaumkern wird dabei vom mit Harz getränkten Fasermaterial umgeben und mit diesem umwickelt.

Beim Pul-Braiding-Verfahren handelt es sich um eine Variante des Pul-winding-Verfahrens, bei dem es möglich ist, mehrere verschiedene Schichten Fasermaterial in einer Flechtstruktur, zu verarbeiten.

Die Wahl des geeigneten Fasermaterials stellt für den Fachmann kein Problem dar, da die verarbeitbaren Fasermaterialien aus der etablierten Pultrusionstechnologie bekannt sind. Bevorzugt handelt es sich bei dem Fasermaterial um Kohlefasern, Glasfasern, Polymerfasern, insbesondere Aramidfasern, oder Textilfasern, besonders bevorzugt um Aramid- oder Kohlefasern.

Das gleiche gilt für das Matrixmaterial, bei dem jedwedes für die Pultrusion geeignetes thermoplastisches Material bzw. nach Vernetzung zu einem Duroplasten umsetzbares Harz eingesetzt werden kann. Bevorzugt sind besagte, zu einem Duroplasten umsetzbare Harze. Insbesondere handelte s sich bei solchen um Polyester-, Vinylester-, Phenol-, PU- oder Epoxydharze, besonders bevorzugt um PU- oder Epoxydharze.

Das für den Schaumkern verwendete Material ist erfindungsgemäß Poly(meth)acrylimid, im Text kurz als PMI bezeichnet. Die Formulierung (Meth)acryl- steht dabei für Methacryl-, Acryl- oder für Mischungen aus beiden. Solche PMI-Schaume werden normalerweise in einem zweistufigen Verfahren hergestellt: a) Herstellung eines Gusspolymerisats und b) Aufschäumen dieses Gusspolymerisats.

Zur Herstellung des Gusspolymerisats werden zunächst Monomergemische, welche (Meth)acrylsäure und (Meth)acrylnitril, vorzugsweise in einem Molverhältnis zwischen 2:3 und 3:2, als Hauptbestandteile enthalten, hergestellt. Zusätzlich können weitere Comonomeren verwendet werden, wie z.B. Ester der Acryl- oder Methacrylsäure, Styrol, Maleinsäure oder Itaconsäure bzw. deren Anhydride oder Vinylpyrrolidon. Dabei sollte der Anteil der Comonomeren jedoch nicht mehr als 30 Gew% betragen. Geringe Mengen von vernetzenden Monomeren, wie z.B. Allylacrylat, können auch verwendet werden. Die Mengen sollten jedoch vorzugsweise höchstens 0,05 Gew.-% bis 2,0 Gew.-% betragen.

Das Gemisch für die Copolymerisation enthält ferner Treibmittel, die sich bei Temperaturen von etwa 150 bis 250 °C entweder zersetzen oder verdampfen und dabei eine Gasphase bilden. Die Polymerisation erfolgt unterhalb dieser Temperatur, so dass das Gusspolymerisat ein latentes Treibmittel enthält. Die Polymerisation findet zweckmäßig in Blockform zwischen zwei Glasplatten statt.

In einem zweiten Schritt erfolgt dann bei entsprechender Temperatur das Aufschäumen des Gusspolymerisats. Die Herstellung solcher PMI-Schäume ist dem Fachmann grundsätzlich bekannt und kann beispielsweise in EP 1 444 293, EP 1 678 244 oder WO 2011/138060 nachgelesen werden.

Die als Kernmaterial für das Pul-Core-Verfahren benötigten Schaumteile können entweder durch eine Herstellung mittels des weiter oben beschriebenen In-mold-Foamings hergestellt werden, oder aber bevorzugt aus aufgeschäumten Schaumplatten herausgeschnitten, gesägt oder gefräst werden. Dabei können bevorzugt mehrere Schaumteile aus einer Platte geschnitten werden. In einer besonderen Alternative kann auch der Verschnitt aus der Herstellung größerer PMI-Schaumteile, wie sie z.B. im Flugzeugbau oder bei der Herstellung von Windkraftwerken verwendet werden, optional nachgeschnitten werden und zum Einsatz kommen.

Als Material für den Schaumkern werden bevorzugt PMI-Schäume in einem Dichtebereich von 30 bis 200 kg/m³ eingesetzt. Als PMI-Schäume seien insbesondere ROHACELL^{®}-Typen der Firma Evonik Industries AG genannt.

Gesägte, geschnittene oder gefräste Schaumkernstücke haben dabei den Vorteil gegenüber mittels In-mold-Foaming hergestellten, dass diese an der Oberfläche offene Poren aufweisen. Beim Inkontaktbringen mit den harzgetränkten Fasern dringt ein Teil des noch nicht ausgehärteten Harzes in diese offenen Poren an der Schaumkernoberfläche ein. Dies hat den Vorteil, dass nach Aushärtung eine besonders starke Haftung an der Grenzfläche zwischen Schaumkern und Mantelmaterial erhalten wird.

Da der Schaumkern im Gegensatz zum Fasermaterial nicht auf Rollen mit mehreren hundert Metern Material vorgelegt werden kann, wird dieser bevorzugt in Form mehrerer, aneinander gereihter Einzelstücke kontinuierlich in die Pultrusionsanlage geführt. Dies kann händisch oder, insbesondere mit längennormierten Schaumstücken, automatisiert erfolgen.

Neben dem besagten Verfahren sind gleichsam neuartige Hohlprofile, bestehend aus einem oder mehreren PMI-Schaumkernen und einem Mantelmaterial, welches aus einem Fasermaterial und einem Matrixmaterial gebildet wurde, Teil der vorliegenden Erfindung. Bezüglich der dabei zum Einsatz kommenden Materialien gilt das gleiche wie zuvor bezüglich des Verfahrens beschrieben. Bevorzugt handelt es sich bei dem Matrixmaterial um einen Duroplasten, insbesondere um ein ausgehärtetes Epoxyd- oder PU-Harz. Bei dem Fasermaterial handelt es sich insbesondere um Kohle- oder Glasfasern.

Ein solches erfindungsgemäßes, mit einem PMI-Schaum gefülltes Hohlprofil zeichnet sich insbesondere dadurch aus, dass es sich bei dem Deckmaterial um mit einem Fasermaterial verstärkten Duroplasten und bei dem Schaumkern um einen PMI-Schaum handelt, und dass das PMI-Schaum gefüllte Hohlprofil keine Klebeschicht und keine Fügestellen aufweist.

Ein solches neuartiges Hohlprofil mit einem PMI-Schaumkern hat große Vorteile gegenüber dem Stand der Technik. Das Fehlen von Fügestellen trägt zu einer gleichmäßigen mechanischen Belastbarkeit und einer gesteigerten Gesamtstabilität des Hohlprofils bei. Das Fehlen von Klebeschichten trägt zu Gewichtseinsparungen und einer deutlich vereinfachten Herstellbarkeit, bei mindestens vergleichbarer mechanischer Belastbarkeit, bei.

In einer besonderen Ausführungsform kann der PMI-Schaum ein weiteres Material aus Metall oder einem anderen Kunststoff eingebettet in dem Schaummaterial enthalten. Dieses kann beispielsweise in Form eines Rohres vorliegen. Ein solches Rohr kann beispielsweise bei der Verwendung im Karosseriebau als Kabelleitung fungieren.

Ergänzend oder unabhängig davon kann der PMI-Schaum Inserts, insbesondere metallische Inserts aufweisen. Solche Inserts dienen später als Anbindungstellen für das Bauteil bei der Verwendung z.B. im Automobil- oder Flugzeugbau. Dabei kann als Insert z.B. ein Metallblock eingebracht werden, in den dann anschließend ein Gewinde, welches später dann verschraubt werden kann, eingefräst wird.

Die erfindungsgemäßen Hohlprofile mit einem PMI-Schaumkern bzw. die nach dem erfindungsgemäßen Verfahren hergestellten, einen PMI-Schaumkern aufweisenden Hohlkörper können vielfältig Anwendung finden. Dabei ist ein Hauptaugenmerk, ohne dass diese Beschreibung in irgendeiner Form einschränkend zu verstehen ist, auf den Leichtbau gerichtet. Dies betrifft insbesondere den Automobil-, Nutzfahrzeugs-, Schiffs-, Flugzeug-, Hubschrauberbau, die Konstruktion von Anlagen zur Windenergiegewinnung und die Raumfahrt. Im Automobilbau sei insbesondere die Konstruktion von Knautschbereichen, z.B. im Vorderwagenbereich als so genannte Crashbox, genannt. Bei einem solchen Einsatz stellen die erfindungsgemäßen Hohlprofile, in eine entsprechende Matrix, z.B. gleichsam in einer PMI-Schaummatrix, eingebettet eine mechanisch nahezu gleichwertige, dabei jedoch deutlich leichtere Alternative zu Aluminium oder Stahl dar.

### Index zu den Zeichnungen

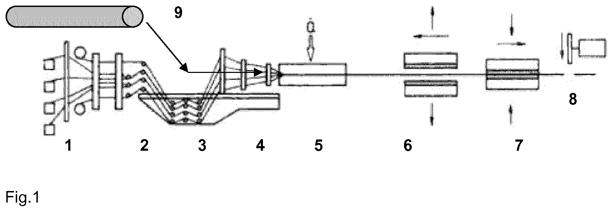

Fig.1 stellt beispielhaft den schematischen Aufbau einer für das erfindungsgemäße Pul-Core-Verfahren geeignete Anlage dar. Folgend der Index zur Fig.1:
1 Zusammenführen der Rohfasern
2 Auftrennen der Rovings und Ausrichtung der Fasern
3 Imprägnieren/Tränken der Rohfaser mit produktspezifischer Harzrezeptur in Tränkwanne
4 Vorformen des Stranges mittels Werkzeugmuffe
5 Formgebung , Aushärtung und Kalibrierung im beheizten Werkzeug
6 Kühlstrecke
7 Ziehen
8 Trennen mittels einer Säge
9 Zufügen des Schaumkerns

## Patentansprüche

1. Verfahren zur kontinuierlichen Herstellung von faserverstärkten, mit einem Schaumkern gefüllten Endlosprofilen, wobei es sich bei dem Verfahren um ein Pultrusionsverfahren handelt, bei dem in der Mitte ein Schaumkern zugeführt wird, um den mittels des Pultrusionsverfahrens eine Deckschicht aus einem Fasermaterial und einem Thermoplasten oder einem Duroplasten gebildet wird, **dadurch gekennzeichnet, dass** ein PMI-Schaumkern verwendet wird.

2. Verfahren gemäß Anspruch 1, **dadurch gekennzeichnet, dass** der Schaumkern in Form mehrerer, aneinander gereihter Einzelstücke kontinuierlich in die Pultrusionsanlage geführt wird.

3. Verfahren gemäß Anspruch 1 oder 2, **dadurch gekennzeichnet, dass** es sich bei dem Fasermaterial um Kohlefasern, Glasfasern, Polymerfasern, insbesondere Aramidfasern, oder Textilfasern, bevorzugt um Aramid- oder Kohlefasern handelt.

4. Verfahren gemäß mindestens einem der Ansprüche 1 bis 3, **dadurch gekennzeichnet, dass** es sich bei dem Duroplasten um ein Material, das aus einem Polyester-, Vinylester-, Phenol-, PU- oder Epoxydharz, bevorzugt aus einem PU- oder einem Epoxydharz gebildet wurde handelt.

5. Verfahren gemäß mindestens einem der Ansprüche 1 bis 4, **dadurch gekennzeichnet, dass** das Fasermaterial in Form einzelner Fasern, Rovings und/oder Vliese, Geweben und/oder Gelegen eingesetzt wird.

6. Verfahren gemäß mindestens einem der Ansprüche 1 bis 4, **dadurch gekennzeichnet, dass** als Material für den PMI-Schaumkern PMI-Schäume in einem Dichtebereich von 30 bis 200 kg/m³ verwendet werden.

7. Verfahren gemäß mindestens einem der Ansprüche 1 bis 6, **dadurch gekennzeichnet, dass** es sich bei dem Pultrusionsverfahren um ein um die Schaumkernzuführung modifiziertes Pul-preforming-, Pul-Winding- oder Pul-Braiding-Verfahren handelt.

8. Ein Schaum gefülltes Hohlprofil, bestehend aus einem Schaumkern und einem Deckmaterial, wobei es sich bei dem Deckmaterial um mit einem Fasermaterial verstärkten Duroplasten handelt, und das Schaum gefüllte Hohlprofil keine Klebeschicht und keine Fügestellen aufweist, **dadurch gekennzeichnet, dass** es sich bei dem Schaumkern um einen PMI-Schaum handelt.

9. Ein PMI-Schaum gefülltes Hohlprofil gemäß Anspruch 8, **dadurch gekennzeichnet, dass** das der PMI-Schaumkern an der Grenzfläche zwischen PMI-Schaumkern und Mantelmaterial offene, mit Matrixmaterial gefüllte Poren aufweist.

10. Ein PMI-Schaum gefülltes Hohlprofil gemäß Anspruch 8 oder 9, **dadurch gekennzeichnet, dass** es sich bei dem Duroplasten um ein ausgehärtetes Epoxyd- oder PU-Harz handelt, und dass es sich bei dem Fasermaterial um Kohle- oder Glasfasern handelt.

11. Ein PMI-Schaum gefülltes Hohlprofil gemäß mindestens einem der Ansprüche 8 bis 10, **dadurch gekennzeichnet, dass** der PMI-Schaum ein weiteres Material aus Metall oder einem anderen Kunststoff, optional in Form eines Rohres, enthält.

12. Ein PMI-Schaum gefülltes Hohlprofil gemäß mindestens einem der Ansprüche 8 bis 11, **dadurch gekennzeichnet, dass** der PMI-Schaum, Inserts, insbesondere metallische Inserts aufweist.

13. Verwendung der mit PMI-Schaum gefüllten Hohlprofile gemäß mindestens einem der Ansprüche 8 bis 12 im Automobil-, Nutzfahrzeugs-, Schiffs-, Flugzeug-, Hubschrauberbau, bei der Konstruktion von Anlagen zur Windenergiegewinnung und in der Raumfahrt.

## Claims

1. Process for the continuous production of fibre-reinforced continuous profiles comprising a foam core, wherein the process involves a pultrusion process in which a foam core is introduced in the centre and, by means of the pultrusion process, an outer layer made of a fibre material and of a thermoplastic or of a thermoset is formed around the said core, **characterized in that** a PMI foam core is used.

2. Process according to Claim 1, **characterized in that** the foam core is introduced continuously in the form of a plurality of successive individual pieces into the pultrusion plant.

3. Process according to Claim 1 or 2, **characterized in that** the fibre material involves carbon fibres, glass fibres, polymer fibres, in particular aramid fibres, or textile fibres, preferably aramid fibres or carbon fibres.

4. Process according to at least one of Claims 1 to 3, **characterized in that** the thermoset involves a material formed from one of the following resins: polyester, vinyl ester, phenolic, PU or epoxy, preferably from PU resin or from an epoxy resin.

5. Process according to at least one of Claims 1 to 4, **characterized in that** the fibre material is used in the form of individual fibres, rovings and/or non-wovens, wovens and/or laid scrims.

6. Process according to at least one of Claims 1 to 4, **characterized in that** PMI foams in the density range from 30 to 200 kg/m³ are used as material for the PMI foam core.

7. Process according to at least one of Claims 1 to 6, **characterized in that** the pultrusion process involves one of the following processes around the introduced foam core: modified pul-preforming, pul-winding or pul-braiding.

8. Hollow profile comprising foam and composed of a foam core and of an outer material, where the outer material involves thermoset reinforced with a fibre material and the hollow profile comprising foam has no adhesive layer and no joints, **characterized in that** the foam core involves a PMI foam.

9. Hollow profile comprising PMI foam, according to Claim 8, **characterized in that** at the interface between PMI foam core and jacket material the PMI foam core has open pores comprising matrix material.

10. Hollow profile comprising PMI foam, according to Claim 8 or 9, **characterized in that** the thermoset involves a hardened epoxy resin or hardened PU resin, and that the fibre material involves carbon fibres or glass fibres.

11. Hollow profile comprising PMI foam, according to at least one of Claims 8 to 10, **characterized in that** the PMI foam comprises a further material made of metal or of another plastic, optionally in the form of a tube.

12. Hollow profile comprising PMI foam, according to at least one of Claims 8 to 11, **characterized in that** the PMI foam has inserts, in particular metallic inserts.

13. Use of the hollow profiles comprising PMI foam, according to at least one of Claims 8 to 12, in automobile construction, commercial vehicle construction, shipbuilding, aircraft construction, and helicopter construction, in the construction of installations for obtaining energy from wind, and in space travel.

## Revendications

1. Procédé de fabrication continue de profilés continus renforcés par des fibres, remplis avec un noyau de mousse, le procédé étant un procédé de pultrusion, selon lequel un noyau en mousse est introduit au milieu, autour duquel une couche de recouvrement en un matériau fibreux et un thermoplastique ou un duroplastique est formée par le procédé de pultrusion, **caractérisé en ce qu'**un noyau en mousse de PMI est utilisé.

2. Procédé selon la revendication 1, **caractérisé en ce que** le noyau en mousse est introduit en continu dans l'unité de pultrusion sous la forme de plusieurs fragments individuels successifs.

3. Procédé selon la revendication 1 ou 2, **caractérisé en ce que** le matériau fibreux consiste en des fibres de carbone, des fibres de verre, des fibres polymères, notamment des fibres d'aramide, ou des fibres textiles, de préférence des fibres d'aramide ou de carbone.

4. Procédé selon au moins l'une quelconque des revendications 1 à 3, **caractérisé en ce que** le duroplastique est un matériau qui a été formé à partir d'une résine de polyester, d'ester de vinyle, de phénol, de PU ou d'époxyde, de préférence à partir d'une résine de PU ou d'époxyde.

5. Procédé selon au moins l'une quelconque des revendications 1 à 4, **caractérisé en ce que** le matériau fibreux est utilisé sous la forme de fibres individuelles, de stratifils et/ou de non-tissés, de tissus et/ou de nappes.

6. Procédé selon au moins l'une quelconque des revendications 1 à 4, **caractérisé en ce que** des mousses de PMI dans une plage de densité de 30 à 200 kg/m³ sont utilisées en tant que matériau pour le noyau en mousse de PMI.

7. Procédé selon au moins l'une quelconque des revendications 1 à 6, **caractérisé en ce que** le procédé de pultrusion est un procédé Pul-preforming, Pul-winding ou Pul-braiding modifié pour l'introduction d'un noyau en mousse.

8. Profilé creux rempli de mousse, constitué par un noyau en mousse et un matériau de recouvrement, le matériau de recouvrement consistant en un duroplastique renforcé avec un matériau fibreux, et le profilé creux rempli de mousse ne comprenant pas de couche adhésive et pas de joints, **caractérisé en ce que** le noyau en mousse est une mousse de PMI.

9. Profilé creux rempli avec une mousse de PMI selon la revendication 8, **caractérisé en ce que** le noyau en mousse de PMI comprend des pores ouverts remplis avec un matériau de matrice à l'interface entre le noyau en mousse de PMI et le matériau de l'enveloppe.

10. Profilé creux rempli avec une mousse de PMI selon la revendication 8 ou 9, **caractérisé en ce que** le duroplastique est une résine d'époxyde ou de PU durcie, et **en ce que** le matériau fibreux consiste en des fibres de carbone ou de verre.

11. Profilé creux rempli avec une mousse de PMI selon au moins l'une quelconque des revendications 8 à 10, **caractérisé en ce que** la mousse de PMI contient un matériau supplémentaire en métal ou un autre plastique, éventuellement sous la forme d'une tube.

12. Profilé creux rempli avec une mousse de PMI selon au moins l'une quelconque des revendications 8 à 11, **caractérisé en ce que** la mousse de PMI comprend des inserts, notamment des inserts métalliques.

13. Utilisation des profilés creux remplis avec une mousse de PMI selon au moins l'une quelconque des revendications 8 à 12 dans la construction d'automobiles, de véhicules utilitaires, de navires, d'avions, d'hélicoptères, dans la construction d'unités pour la capture de l'énergie éolienne et en astronautique.
